# EUROPEAN PATENT APPLICATION

(11) **EP 1 057 580 A1**
(43) Date of publication of application: **06.12.2000**
(21) Application number: 99830318.4
(22) Date of filing: 26.05.1999
(51) Int. Cl.: B23K 26/00

(54) **Device for butt laser welding of metal sheets (tailored blanks), having a locating template which is offset relative to the welding axis**

(71) Applicant: Sat Spa, 10044 Pianezza (Torino) (IT)
(72) Inventor: Caprioglio, Luigi, 10098 Rivoli (Torino) (IT)
(74) Representative: Notaro, Giancarlo

(57) **Abstract**

A device for butt laser welding of metal sheets is described which comprises a locating template (29) for precisely positioning the metal sheets, which is movable between a lowered inoperative position and a raised operative position in a plane parallel and spaced apart from the welding plane of the laser head. The metal sheets are carried by supporting boards (13, 14) which are movable each on a fixed structure between a rearwardly displaced position and an advanced position. Each supporting board (13, 14) is provided with at least one powered shaft (23) having magnetic rollers or wheels (24) for causing the respective metal sheet (A, B) to advance towards the position in which it is then clamped. This clamping operation is carried out by means of magnetically operable clamping means comprising an upper clamping cross member (37) which can be positioned also at a short distance from the metal sheet in order to limit vertical movement of the sheet during sliding thereof towards the position in which the metal sheet is then clamped.

## Description

The present invention relates to devices for butt laser welding of metal sheets. Devices of this type have been already known which comprise:
two substantially coplanar boards, for supporting two respective metal sheets which are to be butt welded,
a locating template for locating the metal sheets precisely, which is movably mounted between a lowered inoperative position and a raised operative position, in which it projects above the plane of the sheet supporting boards,
means for feeding a first sheet to be welded by causing it to slide on said first supporting board until a leading edge of said first sheet comes in contact with said locating template, after that the latter has been brought to its raised operative position,
means for clamping said first sheet after that it has been so positioned against said locating template,
means for feeding a second sheet to be welded, by causing it to slide on said second supporting board, until a leading edge of said second sheet comes in contact with the leading edge of said first sheet clamped on said first board, after that the locating template has been brought to its lowered inoperative position,
means for clamping said second sheet after that it has been so positioned against said first sheet, and
a laser welding head able of relative movement with respect to the sheet supporting boards along a horizontal direction lying in the contact plane between the metal sheets.

Devices of the above indicated known type have been used, for instance in the automotive industry, to provide tailored blanks formed by metal sheets of different thickness welded to each other, which blanks are to be subjected later to a pressing operation in order to obtain components having parts of different thickness and/or made by steel of different quality and/or coated or not with protective layers, such as a zinc layer. By using components obtained in this manner the structure weight can be reduced to a minimum, since only the areas of the component which are subjected to greater stresses are provided with greater thickness or higher qualities of the material.

For manufacturing tailored blanks, power laser welding machines are used of the type which has been indicated at the beginning of the present description. In the use of these machines, the welding quality depends upon the power of the laser beam, the speed of movement of the laser head, the focal length of the optical system and the covering gasses which are employed, but above all the welding quality depends upon the quality of the cut surface of the metal sheets at their edges which are to come in contact with each other, and the resulting gaps which may exist between the contact edges of the sheets, due to irregularities thereof, as well as upon the position of the sheets with respect to the optical axis of the laser beam. Since these machines are automated machines with high cadence, the problem of a perfect contact between the metal sheets and their position relative to the optical axis is extremely important, since a high precision is generally requested.

The machines which have been made in the past exploiting the principle of operation described in the foregoing, have the further problem of protecting the above mentioned locating template adequately. As a matter of fact, in the known machines, the template is located substantially at the welding plane of the laser head. When the template is in its lowered inoperative position, it is usually protected, according to the prior art, by a covering structure, since strong projections of gasses and fumes take place below the welding area. The above mentioned covering structure is however exposed to an extremely severe environment and does not protect the template satisfactorily. It must be also noted that the quality of welding is greatly affected by the quality of the reference provided by the template. Therefore, the template is a high precision member, which is generally slidably mounted on relatively delicate guides and it is undesired that it is located in a very severe environment involving fumes, high temperature and the like.

The object of the present invention is that of overcoming the above described drawbacks.

In view of achieving this object, the invention provides a device for butt laser welding of metal sheets, having the features which have been indicated at the beginning of the present description and further characterized in that:
said locating template is movable in a vertical plane parallel to the welding plane of the metal sheets and spaced apart relative thereto towards said first supporting board,
at least said first supporting board is slidably mounted on a fixed supporting structure, in a horizontal direction perpendicular to the welding plane of the laser head, between an advanced position, in which the metal sheet carried thereon has its leading edge located in the welding plane of the laser bead, and a rearwardly displaced position located before the vertical plane of the sliding movement of the above mentioned locating template,
said feeding means and said clamping means of said first metal sheet are associated with said first board and are movable therewith, so that the first metal sheet can be fed on said first board and located against the template when the first board is at its rearwardly displaced position, spaced apart from the welding plane of the laser head, said first sheet being then clamped on said first board and subsequently brought to the welding position by a sliding movement of the first board up to said advanced position, so that said second metal sheet can then be moved in contact therewith.

Due to the above indicated features, it is clearly apparent that the device according to the invention is free from the above mentioned drawbacks. Indeed, when the locating template is in its lowered inoperative position, it is well spaced apart from the welding area and therefore fully protected against the risk of damages due to the severe environment which is created at the welding area.

In the preferred embodiment of the invention, also said second supporting board is slidably mounted on a fixed supporting structure, in a horizontal direction perpendicular to the welding plane of the laser head, between an advanced position, in which the metal sheet carried thereon has its leading edge located in the welding plane of the laser head, and a rearwardly displaced position, said feeding means and said clamping means for the second metal sheet being associated with said second board and movable therewith.

It is apparent that the movement of each supporting board between its rearwardly displaced position and its advanced position must be provided in an extremely precise and repeatable manner. To this end, the preferred embodiment of the invention is further characterized in that it comprises (at least for the first supporting board, but preferably for both supporting boards):
control means for driving the sliding movement of the supporting board, including a rotating cam rotatably supported by the fixed supporting structure and cooperating with a cam-follower member, carried by the first supporting board, for pushing said board from its advanced position to its rearwardly displaced position, and
means for biasing the supporting board towards its advanced position, adapted to hold said cam-follower member in engagement with said rotatable cam.

The above mentioned rotatable cam is driven in rotation by numerically controlled motor means or by any other type of control device. Due to the above mentioned features, the repeatability of the positioning operation of the metal sheet is ensured with a very high degree of precision. Preferably, the above mentioned biasing means comprises a fluid cylinder, typically an adjustable air pressure cylinder. In this manner, by operating the cylinder at a given uniform pressure, any clearance of the system is automatically taken up and the repeatability of the position is ensured, as already indicated, with a high precision.

As also already indicated, the same system is preferably adopted also for the second supporting board.

A further feature of the preferred embodiment lies in that the above mentioned fluid cylinder can be activated also to push the board towards a third position, further spaced from the welding plane of the laser head, to enable maintenance operations to be carried out at the welding area.

Since during welding thermal stresses take place tending to space the sheet supporting boards from each other, means are provided for mutual connection of the two boards at their welding positions, said means being preferably magnetically operated.

It is clearly apparent that by the above described system, due to the precision of the system for positioning the sheet supporting boards, the welding line (corresponding to the horizontal direction of movement of the laser head, usually identified as "axis Y") is kept perfectly parallel to the contact plane of the metal sheets. In carrying out the process, it may be necessary however to move the actual focusing axis of the laser beam to one side or the other of the contact plane of the sheets. This adjustment is generally possible by known means for adjusting the focusing head. However it may happen, mainly due to a possible lack of coincidence of the above defined Y axis with the optical focusing axis of the laser beam, that during movement of the laser head along axis Y, the beam axis is moved slightly from the position. In the known machines, when this drawback occurs, it is necessary to re-align the whole optical system, which requires the machine to remain inactive for a considerable time. In the present invention a simple mechanical adjustment has been provided which enables the operator to vary the position of the welding line in a very short time, separately at one side or the other of the machine, with no need of an intervention on the laser head. To provide this possibility, the above mentioned cam driving the movement of each board between its rearwardly displaced position and its advanced position has been made with an adjustable geometry. In particular, a peripheral portion of the cam rotatably supports an out-of-axis rotatable member which can be selectively positioned at different angular positions, with the aid of a graduated scale.

The specific structure and the operation of this adjustment device will be described in detail hereinafter. By this adjustment device it is generally possible to move the welding line with extreme simplicity and precision, also with a non parallel movement, according to the needs which may be encountered.

A further aspect of the present invention relates to the technical problems that are encountered in the stage of movement of the metal sheets towards the final position in which they are clamped on the respective supporting boards. In the known machines, the sheet which is located against the template is caused to advance by pushing members which are located at the rear of the sheet (with reference to the direction of movement). Since the metal sheets involved are often of great size, but are relatively thin, the above mentioned rear pushing action may give origin to deformation and deflections of the metal sheets along the vertical plane. If one sheet raises at one or more parts thereof with respect to the supporting plane, the contact line between this sheet and the locating template is no longer a straight line, but rather a curved line. Furthermore, with sheets which are relatively narrow and elongated in the direction of movement thereof it may happen that the sheet presents itself before the template in a slightly rotated position in the horizontal plane. In the known machines, the above mentioned rear pushing members may prevent, because of their friction against the sheet, a correction of these misalignments of the sheet relative to the template. In order to avoid this drawback, it has been proposed also to use pushing members provided with wheels, in order to reduce friction transversely to the direction of movement, but this solution has not solved the problem satisfactorily, because of high concentrations of stresses on the thin edge of the sheet.

According to the invention, the above mentioned problem has been solved by considering that a more efficient condition of alignment of the sheet can be provided if the sheet is caused to advance, rather than by pushing it from the rear, by applying a force through advancing means located in proximity of the front part (with reference to the direction of movement) of the sheet. Therefore, according to the invention, the above mentioned means associated with each board to cause the respective sheet to slide towards the reference position are constituted by one or more motorized shafts which are rotatably mounted on the structure of the board adjacent to the front part thereof, said shafts being arranged transversely to the direction of movement and carrying magnetic rollers or wheels which are to come in contact with the lower surface of the respective metal sheets.

The above mentioned magnetic rollers are rotated through the time necessary to cause the sheet to come closer to the locating template until complete and perfect contact of the metal sheet against this template is obtained, if necessary after a rotation of the sheet in the horizontal plane, if the latter firstly comes in contact with the template only at one end of its leading edge. In this latter case, the magnetic rollers will keep on rotating to obtain proper alignment of the sheet and will keep on rotating until clamping of the metal sheet is carried out.

A considerable advantage of the magnetic rollers with respect to other systems is that once welding is completed the same magnetic rollers can be used to move the whole structure formed by the two welded metal sheets towards the outlet of the machine, naturally by reversing the direction of rotation of the magnetic rollers associated with one of the two supporting boards.

A further advantage lies in that only one supporting shaft with many magnetic rollers is able to align a number of metal sheets arranged in parallel against the same locating template.

Finally, a further considerable advantage of the magnetic rollers is that the system accepts sheet metal elements having also an irregular shape, with no need of reconfiguration of the system. Therefore, the machine becomes able to absorb pieces of any shape.

A further aspect of the present invention relates to the manner in which the metal sheets, once are located on the respective supporting boards, are clamped thereon.

In the known machines, the metal sheets are clamped by hydraulically controlled clamps. The size of these machines is such as to enable them to operate also on very wide sheets. A size of about 2 meters is usual. It is immediately apparent that the clamp structure must be adequately dimensioned in order to support the resulting stresses and ensure the requested stability to the sheet supporting plane.

In order to ensure perfect clamping of the metal sheets with a relatively simple, compact and light structure, the invention is further characterized in that the above mentioned means for clamping each metal sheet are magnetically controlled. In the preferred embodiment, the clamping means comprises a clamp structure, comprising a sheet supporting base including electromagnet means, and an upper clamping cross member, made of a ferromagnetic material, carried by the respective board, and movable relative thereto from a raised inoperative position to a lowered operative position, in which said cross member presses the metal sheet against said base.

By using electromagnetic clamping means it is obviously possible to obtain the same clamping force which in the known machines is obtained mechanically or hydraulically, but with a structure having negligible size and weight with respect to the known solutions.

The new solution described above has provided a number of advantages. Firstly, the big clamps in the machines of the prior art have a great difficulty to move vertically through a long distance (such as 60-100 mm) because of their shape. This difficulty is not present in the case of the device according to the invention, in which the above mentioned upper cross member is carried by end uprights which are vertically slidably mounted on the structure of the sheet supporting board and are connected to a driving motor by means of an articulated linkage transmission. The above mentioned advantage, along with that the sheet supporting boards can be moved away from the welding area, enables the metal sheet to be fed to the two respective supporting boards laterally therefrom, with simplified robotized systems.

When one then considers that the machines of this type have a sheet transfer time which is comparable with the welding time, the convenience of the device according to the invention is clearly apparent of providing two machines served by the same laser unit, so as to reduce the investment costs, by arranging the two machines side by side and feeding the metal sheets to them starting from the central area comprised therebetween, by transfer systems of any known type, typically simple linear pick-up devices, rather than more complicated and costly multi-axis robots.

Due to the above described configuration of the sheet clamping means which are provided in the device according to the invention, an important result can be achieved. The vertical movement of the upper clamping cross member is driven by a numerically controlled motor, which enables a high precision and flexibility of movement to be obtained. Once the metal sheet has been placed in a proper position against the reference template, which is ensured by the driving system using magnetic rollers which has been described above, the upper clamping cross member can be lowered down to a third position, intermediate between the inoperative position and the operative position, in which the cross member is very close to the sheet and for instance is spaced therefrom by a few fractions of millimetre. In this manner, the above mentioned cross member is adapted to limit the vertical movements of the sheet while the sheet is sliding towards the position in which it is clamped. In this manner, the location against the template is carried out perfectly. It is to be noted that because of the use of a non perfectly planar sheet in conventional machines errors in positioning the sheet against the template may take place. However, the system according to the invention fulfils an even more important function in the positioning operation of the second metal sheet against the first sheet, after that the latter has been clamped in the welding position. As a matter of fact, in this stage it may happen, with the known machines, that the second sheet, which usually is less thick than the first sheet, "climbs" over the first sheet, rather than stopping thereagainst, for instance because of a non perfect planarity of the sheets. By the device according to the invention, by arranging the upper clamping cross member of each clamp in the above mentioned third intermediate position, the sheet is left free to slide, but not to raise, since the gap between the upper clamping cross member and the sheet can be of a few tenths of millimetre. In this manner, the contact between the two sheets can be obtained perfectly and with no possibility of a jump of the second sheet over the first sheet, even when the sheet edges have not been cut properly. In this latter case, the situation is particularly dangerous where the sheets each has a front side having two longitudinal edges one of which has a rounded cross-section (as a result of the deformation of the material which takes place during the cutting operation), whereby this edge can encourage the other sheet to climb thereon, above all when also the other sheet has a corresponding edge with rounded cross section. This drawback is totally eliminated by the device according to the invention, due to the features which have been indicated above.

Finally, preferably, the end uprights carrying the upper clamping cross-member of the clamp, which are vertically slidably mounted on the structure of the sheet supporting board, are connected with the associated driving motor by means of an articulated linkage transmission which is arranged in such a way as to minimise decelerations and accelerations of the cross member respectively towards and away from its lowered operative position. Vertical oscillations of the upper cross member of the clamp are thus avoided, which might cause a contact with the sheet during the movement of the latter.

Further features and advantages of the invention will become apparent from the description which follows with reference to the annexed drawings, given purely by way of non limiting example, in which:
figure **1** is a perspective diagrammatic view of a laser butt welding machine for metal sheets, according to a preferred embodiment of the present invention,
figure **2** is a diagrammatic side view of the machine of figure 1,
figures **3-6** are diagrammatic cross-sectional views of a detail of the machine of figures 1, 2, in different operative conditions,
figure **7** is a cross-sectional view, more in detail, of the same detail in the condition corresponding to that shown in figure 6,
figure **8** is a diagrammatic perspective view, at an enlarged scale, of a detail of the machine according to the invention,
figure **9** is a perspective partial view, at a further enlarged scale, of a detail of figure 8,
figure **10** is a side view of a detail of figure 9, and
figure **11** is a view from top of a detail of figure 10.

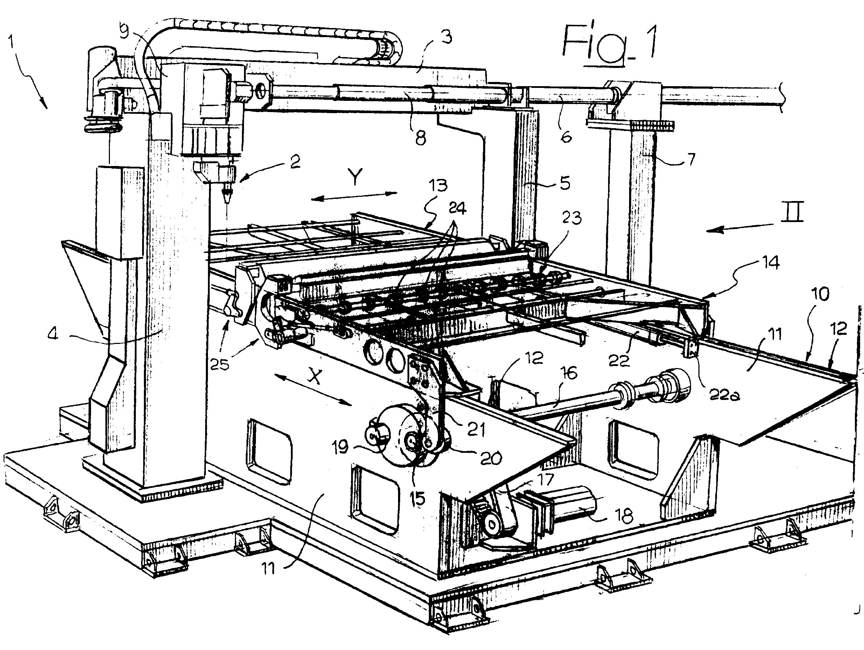

In figure 1, reference numeral 1 generally designates a machine for butt welding of metal sheets by means of a laser beam. The laser welding head is generally designated by reference numeral 2 and is slidably mounted along a direction Y over a cross-member 3 of a gantry-like structure comprising two columns 4, 5 whose upper ends are connected by a cross-member 3. The laser beam coming from a laser generator unit (not shown in the drawings) reaches the focusing head 2 guided within a cylindrical channel 6 carried by column 5 and an auxiliary column 7, as well as through a telescopic cylindrical structure 8 interposed between column 5 and a carriage 9 which is movable along the direction Y and carries the welding head 2.

The details of construction of the laser focusing head 2 and the means for supplying the laser beam to this head are not shown herein, since they can be made in any known way and do not fall within the scope of the present invention.

Between the two support columns 4, 5 there is arranged the fixed supporting structure of the machine, generally designated by reference numeral 10, comprising two vertical side portions 11 which are parallel to each other and perpendicular to direction Y. The two side portions 11 are provided at the top with respective guides 12 on which two boards are slidably mounted, which are respectively generally designated by reference numerals 13, 14, for supporting the metal sheets to be welded.

The two supporting boards 13, 14 are each movable along a horizontal direction X perpendicular to direction Y between an advanced position, corresponding to the welding position of the metal sheets carried thereby, and a rearwardly displaced position (shown in figure 1), spaced apart from the welding plane, i.e. from the plane containing the optical axis of the welding head 2 and the axis Y of movement of the head.

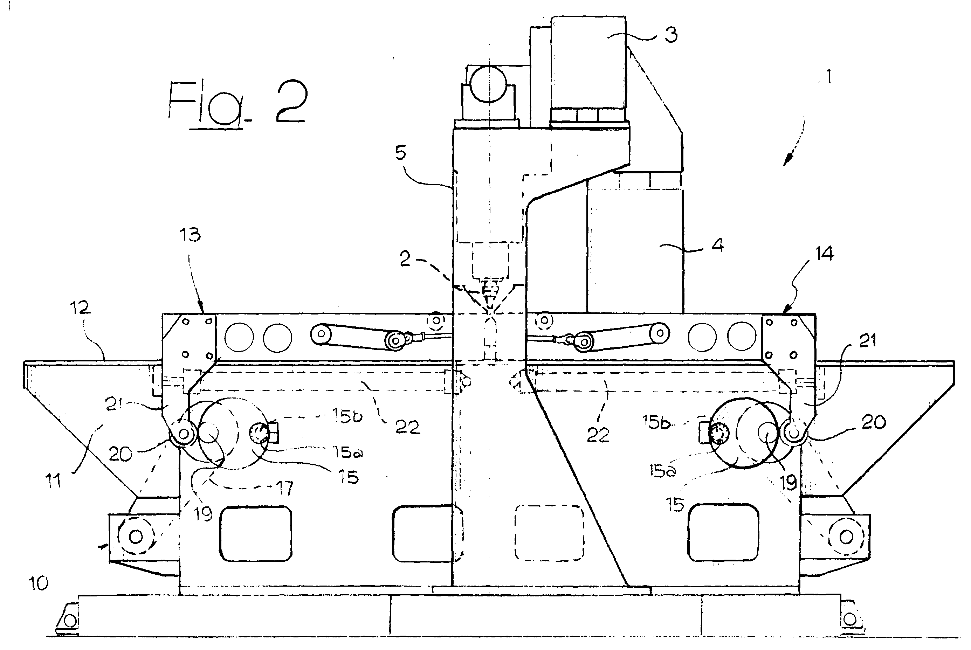

The movement of each board 13, 14 over the guides 12 of the fixed supporting structure 10, along the X direction, is controlled on both sides of each board 13, 14 by a pair of driving cams 15 (only one of which is visible in figure 1) which are rotatably mounted on the two side portions 11 of the fixed structure 10. The two driving cams 15 of each board 13, 14 are controlled in synchronism with each other by a respective shaft 16 which is driven through a toothed belt transmission 17 by an electric motor 18, for example a numerically controlled electric motor. Each cam 15 has an out-of-centre configuration with respect to the associated supporting pin 19, which is coaxial with shaft 16. Each cam 15 cooperates with a cam-follower roller 20 carried by a respective arm 21 rigidly connected to the respective side portion of the board 13 or 14. Each cam-follower roller 20 is kept in contact with cam 15 because each of the two boards 13, 14 is biased towards its advanced position by a pair of air cylinders 22 (only one of which is shown in figure 1) each having a body connected to the fixed supporting structure 10 and a stem connected to a plate 22a forming part of the structure of board 13 or 14. Figure 1 shows, as already indicated, the two boards in their rearwardly displaced position. Starting from this position, the boards can be brought to their advanced position by rotating the respective driving cams 15. During this movement, the air cylinders 22, fed with constant pressure, keep on biasing the respective board towards its advanced position, so as to ensure contact between each cam-follower roller 20 and the respective driving cam 15. The air cylinders 22 can also be extended to bring the respective boards to further rearwardly displaced positions, in which the cam-follower rollers 20 are spaced apart from the respective driving cams, when it is necessary to perform maintenance operations at the welding area between the two sheet supporting boards 13, 14 (see also figure 2).

Each of the two boards 13, 14 is further provided at its front part, with reference to the direction of movement towards the welding area, with a powered shaft 23 (the associated driving transmission is not shown in the drawings) carrying a plurality of magnetic rollers or wheels 24 which are to cause, as will be described more in detail hereinafter, a movement of the metal sheet over the respective board towards the final position in which the sheet can be clamped over the board.

Finally, figure 1 also shows the clamping means, generally designated by reference numeral 25, provided at the front of each of the boards 13, 14 for clamping the respective metal sheet thereon, as will be shown in greater detail in the following.

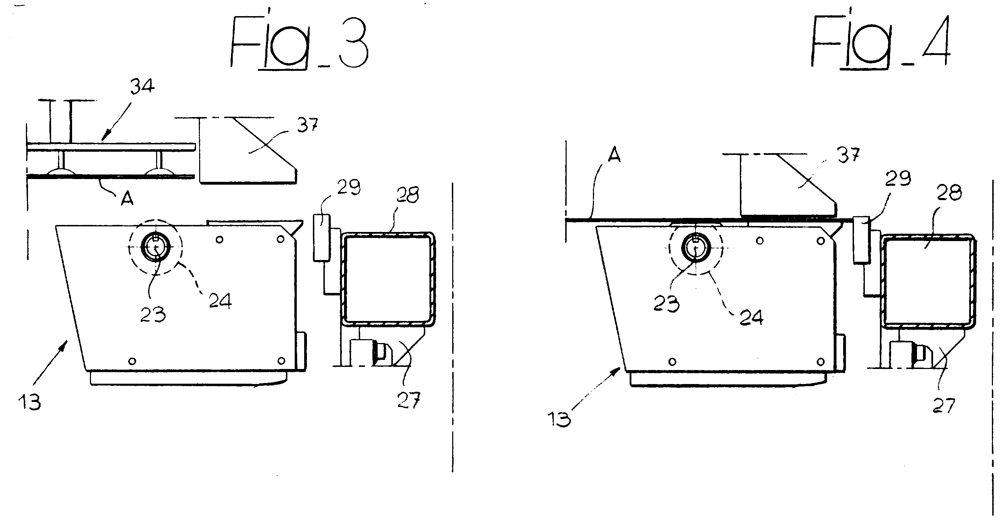

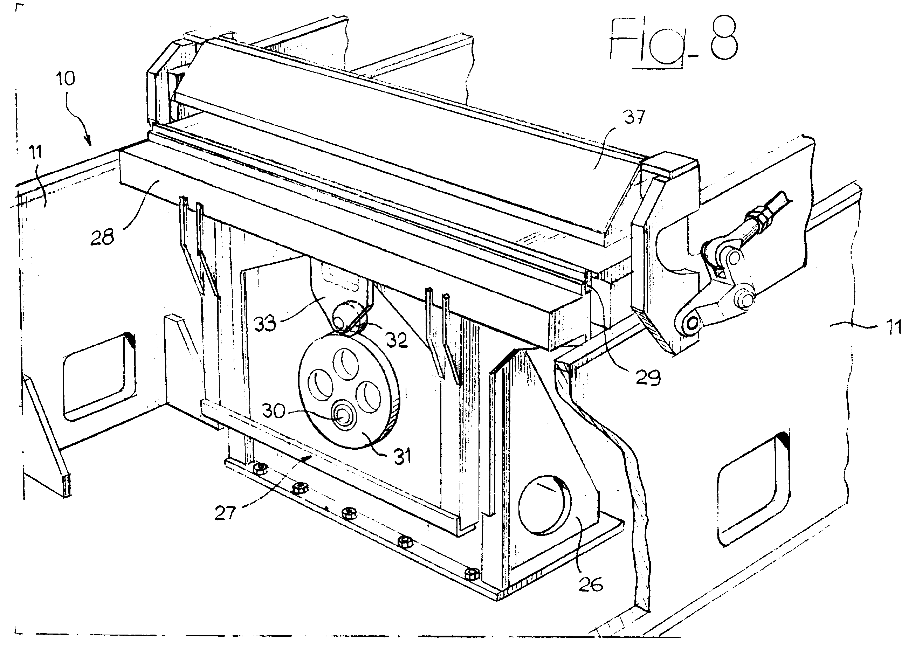

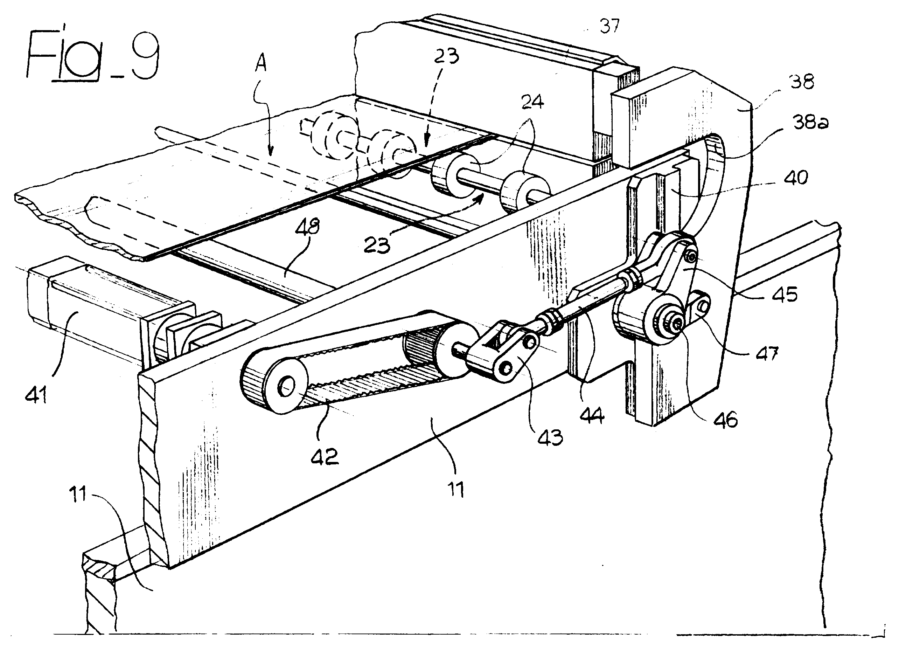

With reference to figure 8, the fixed supporting structure 10 comprises a support 26 mounted on the floor between the two side portions 11, on which there is slidably mounted a peripheral frame 27 carrying a cross member 28 at the top which on its turn carries an elongated plate 29 which is the locating template to be used for locating the metal sheets precisely. The template 29 is movable between a lowered inoperative position (shown in figure 7) in which it is hidden below the two sheet supporting boards 13, 14, and a raised operative position (shown in figure 8, as well as in figures 3, 4) in which it projects above the sheet supporting plane. The operation of this template will be described more in detail in the following. The vertical movement of frame 27 carrying template 29 is controlled by an electric motor (not shown) which drives rotation around a pin 30 (figure 8) of an eccentric disk 31 cooperating with a roller 32 carried by an appendage 33 of the cross member 28. The roller 32 is kept in contact with the disk 31 by the weight of the structure 27. As already indicated, figure 8 shows the above mentioned structure in the condition corresponding to the uppermost raised position of template 29. Starting from this position, template 29 can be lowered by rotation of disk 31 down to a diametrically opposite position.

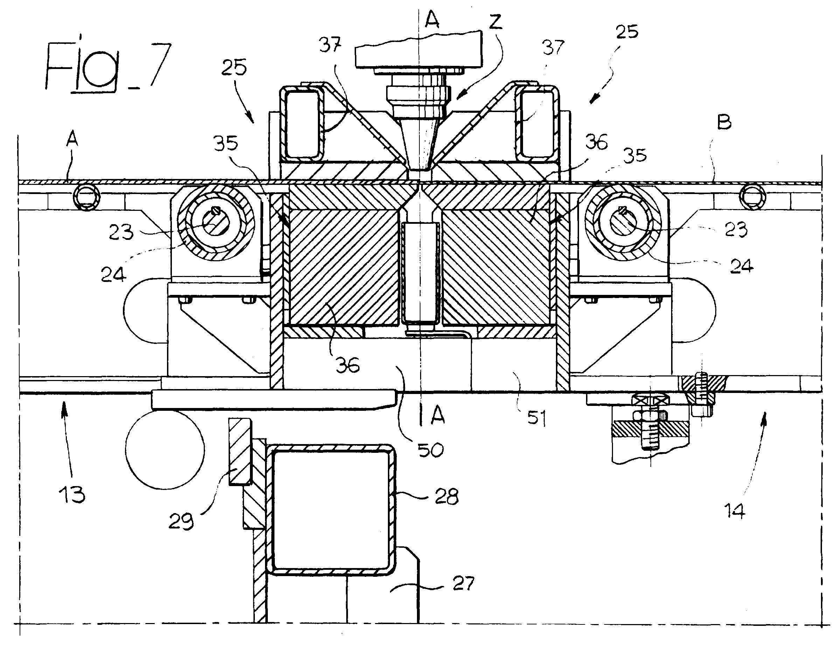

As it is immediately apparent from figures 6, 7, the locating template 29 is arranged in a vertical plane parallel to direction Y which is spaced towards the first board 17 from the welding plane, designated by A-A in figure 7. This is a clear difference over the known machines, in which the locating template is arranged at plane A-A and is thus subjected to inconveniences because of the severe environment which is created at the welding area.

Figure 6 of the annexed drawings shows the front portion of the two boards 13, 14 for supporting the metal sheets, in the advanced conditions of these boards. As already indicated, the two boards can be brought to a rearwardly displaced position. Figures 3 - 5 of the annexed drawings show the front portion of board 13 in its rearwardly displaced position. As shown, in this position the front portion of the board is positioned before and in front of the plane of the locating template 29.

When the metal sheets are loaded on the machine, the two boards 13, 14 are in there rearwardly displaced condition. In particular, board 13 is arranged in the condition shown in figure 3. In this condition, the board 13 is adapted to receive a metal sheet which is to be welded to a second metal sheet carried by the board 14. As it will become apparent also from the following description, the configuration of the machine according to the invention is such that a new metal sheet to be welded is fed to the two supporting boards 13, 14 from one side of the machine (the right hand side with reference to figure 1) due to the central position of column 5 between the two boards 13, 14. The metal sheets to be welded can be fed by means of linear transfer devices of any known type, for example displacing tools provided with suction cups of the type indicated by 34 in figure 3. This figure shows first metal sheet A carried by the transfer tool 34, which deposits the sheet A over the supporting plane of board 13. Once sheet A has been deposited on board 13, the shaft 23 carrying the magnetic wheels 24 is actuated so as to drive sheet A rightwardly (with reference to figure 3) until the leading edge of sheet A comes in contact with the locating template 29. As already described above, the magnetic wheels 24 apply a moving force to the front portion of sheet A, so that any misalignment of the sheet can be corrected simply and automatically, until the whole leading edge of sheet A comes in proper contact with the locating template 29 (see figure 4). Once the metal sheet A has been positioned against the locating template 29, the sheet A is clamped over board 13.

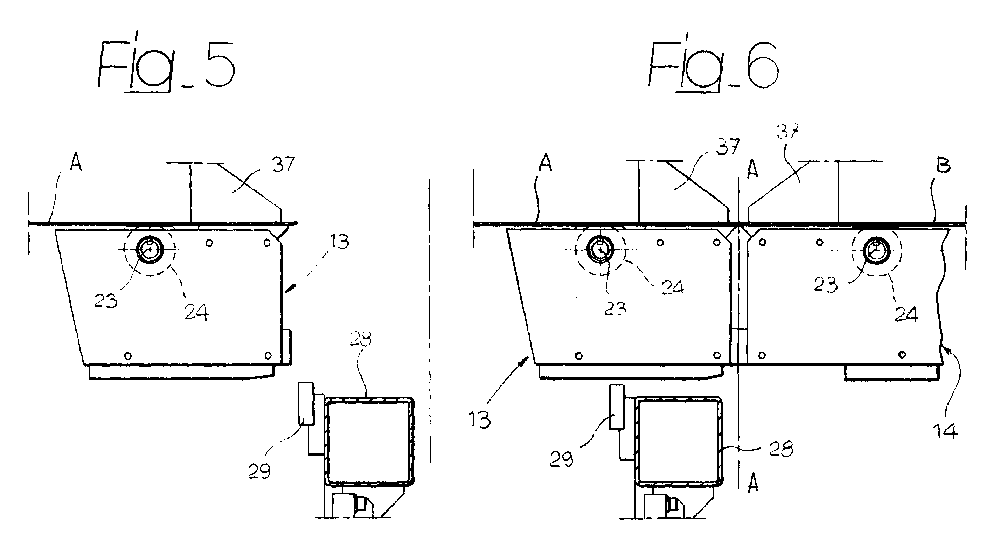

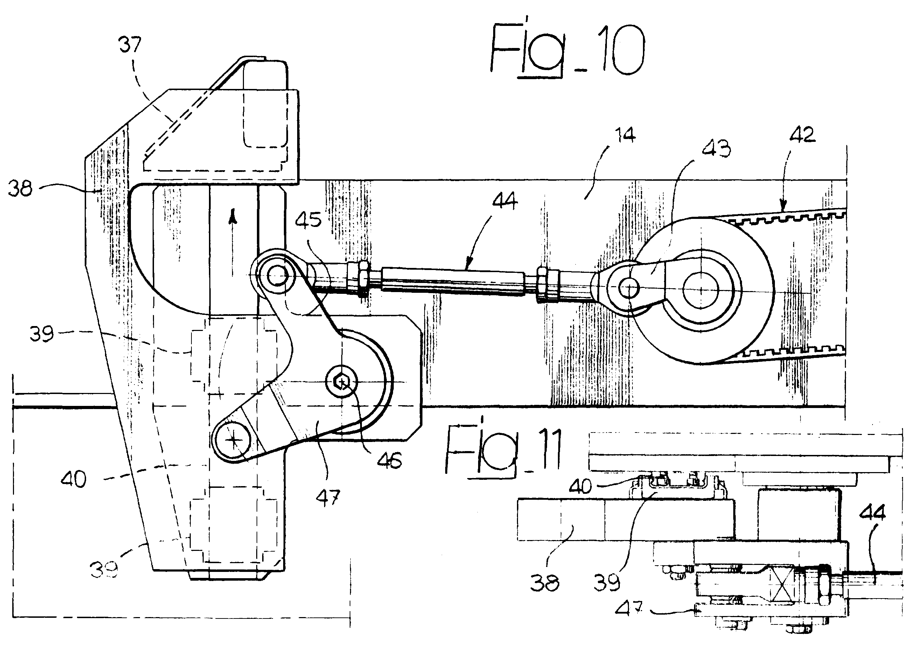

In order to clamp each metal sheet on the respective board, each of the two boards 13, 14 is provided with clamping means 25 (figure 7) each comprising a sheet supporting base 35, including an electromagnet 36, and an upper pressing clamping cross member 37. As shown in figures 8 - 10, the cross member 37 is connected at its ends to two supporting uprights 38 each including pads 39 (figure 10) which are slidably mounted on vertical guides 40 rigidly connected to the side portions of the associated supporting board. Each clamping cross member 37 can be moved vertically between a raised inoperative position, shown for example in figures 3 and 10 and a lowered operative position, in which each cross member presses the respective metal sheet (shown for example in figures 5 - 7). This vertical movement of the upper clamping cross member 37 of the clamp device is driven by an electric motor 41, by means of a belt transmission 42 (figure 9), a crank 43, a further articulated link 44 and a second crank 45 which is articulated at 46 to the structure of the respective board and is connected in rotation to a second crank 47 articulated to one of the two uprights 38. The belt transmission 42 also drives an identical transmutation on the other side of the machine by means of a transverse transmission shaft 48 (figure 9). As clearly apparent from figure 10, the arrangement such that in the lowered condition of the clamping cross member 37 the crank 43 and the link 44 are substantially in line with each other. Therefore, in this condition relatively large angular oscillations of the crank 43 cause relatively reduce the vertical movement of the clamping cross member 37. Thus, high accelerations and decelerations of the upper clamping cross member can be avoided when the latter is in proximity of its lowered position, so as to avoid the risk of vertical oscillations of this cross member, as already described widely in the foregoing. As also already described, the above illustrated system enables the upper clamping cross member 37 to be positioned also at a position very close to the lowered operative position, such as at a distance of a few fractions of millimetres therefrom. As shown in figure 4, the upper cross member 37 is positioned in this intermediate position during the stage in which the metal sheet A is moved towards the locating template 29, so as to prevent any movement along the vertical direction of the metal sheet.

Continuing in the description of the operation of the machine, with reference to figures 3 - 7, once the first sheet A carried by the first supporting board 13 has been moved against the locating template 29 (figure 4), it is clamped by lowering the upper clamping cross member 37, whereupon the locating template 29 can be brought back to its lowered inoperative position (figure 5).

Once the locating template 29 has been lowered, the whole supporting board 13, with the metal sheet A clamped thereon can be rapidly brought from its rearwardly displaced position shown in figure 5 to the advanced position (figure 6) in which the leading edge of the sheet A comes at the welding plane, i.e. at the plane containing direction Y and the axes of the laser focusing head 2, designated by A-A in figure 7. Once the metal sheet A has been positioned in this manner, the second sheet to be welded, designated by B (see figures 6, 7) can be brought against sheet A. The illustrated example relates to the typical case in which the metal sheet B has a thickness lower than that of metal sheet A. Naturally, preliminarly the sheet B is loaded on the supporting board 14 by a sequence of operations absolutely identical to those described for sheet A with reference to figure 3. In particular, the sheet B is fed over the supporting board 14 when the latter is in its rearwardly displaced position, by a linear transfer system using for example a suction cup tool of the type of tool 34 shown in figure 3, which transfers a sheet B over board 14 moving the sheet in a direction parallel to direction Y starting from a metal sheet pick-up area located on one side of the machine (on the right hand side with reference to figure 1). As it has been already illustrated, the same pick-up area for the metal sheets may serve two machines according to the invention of the type shown in figure 1, arranged side by side, with the pick-up area of the metal sheets located at the central area between the two machines. Also as already illustrated, the machine according to the invention is adapted to operate simultaneously also on many pairs of sheets arranged in parallel and with any configuration of the sheet element. The particular configuration of the uprights 38 carrying the upper clamping cross members 37, which have notched portions 38a (see for example figure 9) avoid any interference of these uprights with the metal sheets when the latter are fed above the supporting boards 13, 14 from one side of the machine.

Once the metal sheet B has been positioned on board 14, the sheet B is clamped on this board by means of the respective clamping cross member 37 and the board 14 is then brought rapidly to its advanced position, by activating the driving cams 15, so as to bring sheet B in contact against sheet A at the welding plane A-A (see figures 6, 7).

The metal sheets are thus ready for being subjected to the welding operation which is carried out by the laser head 2 by a movement along the Y direction. Once welding has been completed, the clamping cross members 37 are raised and the unit formed by the two metal sheets A, B welded to each other is moved out of the machine along the X direction. This movement is obtained by means of the shafts 23 carrying the magnetic wheels 24 which are associated with the supporting boards 13, 14, which shafts in this case naturally are rotated both in the same direction. The machine is thus ready for receiving one or more pairs of new sheets to be welded.

With reference to figure 1, each cam 15 carries, at a diametrically opposite position with respect to the articulation pin 19, a cylindrical body 15a which is rotatably eccentrically mounted around a peripheral axis 15b. By adjusting the angular position of the cylindrical body 15a (which bears a graduated scale as an aid to this adjustment) it is possible to micrometrically vary the diameter of cam 15 passing through axes 19, 15b, which enables the length travel of each board 13, 14 between its advanced position and its rearwardly displaced position to be adjusted, so as to obtain the advantages which have been shown above. This adjustment can be carried out differently on the two sides of the machine to obtain even a non parallel arrangement of the sheet.

In the advanced condition of the two boards 13, 14 shown in figure 7, the two boards are rigidly connected to each other by means of mutual coupling means 50, 51, preferably of electromagnetic type, i.e. constituted one by an electromagnet and the other by a ferromagnetic core which is to cooperate therewith.

Naturally, while the principle of the invention remains the same, the details of construction and the embodiments may widely vary with respect to what has been described and illustrated purely by way of non limiting example, without departing from the scope of the present invention.

Alternatively to the magnetic rollers 24 used for moving the metal sheets, also other systems can be used, such as electromagnets carried by articulated arms (so as to leave lateral freedom to the metal sheet) or suction cups carried by movable supports.

## Claims

1. Device for butt laser welding of metal sheets, comprising:
two substantially coplanar boards (13, 14), for supporting two respective boards (A, B) which are to be butt welded,
a locating template (29) for positioning the metal sheets precisely, said template being movably mounted between a lowered inoperative position and a raised operative position, in which it projects above the plane of the boards (13, 14) supporting the metal sheets (A, B),
means (23, 24) for feeding a first metal sheet (A) to be welded by causing it to slide on said first supporting board (13) until the leading edge of said first metal sheet (A) comes in contact with said locating template (29), after that the latter has been brought to its raised operative position,
means (25) for clamping the above mentioned first metal sheet (A) after that the latter has been positioned thereby against said locating template (29),
means (23, 24) for feeding a second metal sheet (B) to be welded, by causing it to slide on said second supporting board (14), until the leading edge of said second metal sheet (B) comes in contact with the leading edge of said first metal sheet (A) clamped on said first board (13), after that the locating template has been brought to its inoperative lowered position,
means (25) for clamping said second metal sheet (B) after that the latter has been positioned against said first sheet (A), and
a laser welding head (2) able of relative movement with respect to the boards (13, 14) supporting the metal sheets (A, B) along a horizontal direction (Y) lying in the contact plane between the metal sheets (A, B),
characterised in that:
said locating template (29) is movable in a vertical plane parallel to the welding plane (A-A) of the metal sheets and displaced with respect thereto towards said first supporting board (13),
at least said first supporting board (13) is slidably mounted on a fixed supporting structure (11), in a horizontal direction (X) perpendicular to the welding plane of the laser head, between an advanced position, in which the metal sheet carried thereon has its leading edge at the welding plane of the laser head, and a rearwardly displaced position, located before the plane of vertical movement of said locating template (29),
said feeding means and said clamping means for the first metal sheet (A) are associated with said first board (13) and movable therewith, so that the first metal sheet (A) can be fed to said first board (13) and located against the template (29) when the first board (13) is at its rearwardly displaced position spaced from the welding plane of the laser head, said first metal sheet (A) being then clamped on said first board (13) and subsequently brought to the welding position by causing the first board (13) to slide to said advanced position, so as to enable said second metal sheet (B) to be then brought in contact therewith.

2. Device according to claim 1, characterised in that also said second supporting board (14) is slidably mounted on a fixed supporting structure (11), along a horizontal direction (X) perpendicular to the welding plane of the laser head, between an advanced position, in which the second metal sheet (B) carried thereon has its leading edge at the welding plane of the laser head, and a rearwardly displaced position, said feeding means (23, 24) and said clamping means (25) for the second metal sheet (B) being associated with said second board (14) and movable therewith.

3. Device according to claim 1 or 2, characterised in that, at least for said first supporting board (13), said device comprises:
means for driving a sliding movement of the supporting board (13, 14), including a rotating cam (15) rotatably supported by the fixed supporting structure (11) and cooperating with a cam-follower member (29) carried by the supporting board (13, 14), to push said board from its advanced position to its rearwardly displaced position,
biassing means (22) for biassing the supporting board (13, 14) towards its advanced position and able to keep said cam-follower member (20) in engagement with said rotatable cam (15).

4. Device according to claim 3, characterised in that said biasing means comprises a fluid cylinder (22).

5. Device according to claim 4, characterised in that said fluid cylinder (22) can be activated also for pushing the board (13, 14) towards a third position, which is further spaced from the welding plane of the laser head, to enable maintenance operations to be carried out at the welding area.

6. Device according to claim 3, characterized in that said cam (15) has an adjustable geometry, so as to enable the position of the contact plane between the two metal sheets (A, B) to be adjusted with respect to the welding plane of the laser head.

7. Device according to claim 6, characterized in that a peripheral portion of the cam (15) carries an eccentrically rotatable number (15a) which can be positioned selectively at different angular positions, with the aid of a graduated scale.

8. Device according to claim 3, characterized in that said rotating cam is provided at each side of the machine.

9. Device according to claim 1, characterized in that means (50, 51) are provided for mutual coupling of the two boards (13, 14) in their advanced positions.

10. Device according to claim 9, characterized in that said mutual coupling means (50, 51) are magnetically operable.

11. Device according to claim 1, characterized in that the means associated with each board (13, 14) for causing the respective metal sheet (A, B) to slide towards the reference position comprises one or more powered shafts (23) rotatably mounted on the structure of the board (13, 14), arranged transversely to the sheet sliding direction and carrying magnetic rollers or wheels (24) which are to come in contact with the lower surface of the respective metal sheet (A, B).

12. Device according to claim 11, characterized in that said magnetic rollers (24) are located at the front part of the respective board (13, 14) for supporting the metal sheet (A, B), in order to apply a moving action to the front part of the metal sheet driving movement of the latter towards the position in which it is then clamped.

13. Device according to claim 1, characterized in that said clamping means (25) for clamping each metal sheet (a, B) are magnetically operable.

14. Device according to claim 13, characterized in that said clamping means (25) comprises a clamp structure, including a sheet supporting base (35) including electromagnet means (36), and an upper pressing and clamping cross member (37), made of a ferromagnetic material, carried by the respective boards (13, 14) and movable relative thereto between a raised inoperative position and a lowered operative position in which said cross member (37) presses the metal sheet against said base (35).

15. Device according to claim 14, characterized in that said upper cross member (37) is provided to be positioned also in a third position, intermediate between said inoperative position and said operative position, in which the cross member (37) is very close to its lowered clamping position and is able to limit the vertical movements of the metal sheet during sliding of the sheet towards the position in which it is then clamped.

16. Device according to claim 14, characterized in that said upper cross member (37) is carried by end uprights (38) which are slidably vertically mounted on the structure of the metal sheet supporting boards (13, 14) and are connected to a driving motor (41) by means of an articulated linkage transmission arranged in such way as to minimize decelerations and accelerations of the cross member (37) towards and away from the lowered operative position respectively.
